# EUROPÄISCHE PATENTSCHRIFT

(11) **EP 1 426 633 B1**
(45) Veröffentlichungstag und Bekanntmachung des Hinweises auf die Patenterteilung: **28.12.2005**
(21) Anmeldenummer: 03104533.9
(22) Anmeldetag: 04.12.2003
(51) Int. Cl.: F16B 37/04, F16B 21/02

(54) **Befestigungssystem**
Fastening system
Syateme de fixation

(30) Priorität: 05.12.2002 DE 10256859
(43) Veröffentlichungstag der Anmeldung: 09.06.2004
(73) Patentinhaber: HILTI Aktiengesellschaft, 9494 Schaan (LI)
(72) Erfinder: Herb, Armin, 86974, Apfeldorf (DE)
(74) Vertreter: Wildi, Roland

(56) Entgegenhaltungen:
- EP-A- 0 268 510
- EP-A- 0 805 297

## Beschreibung

### Technisches Gebiet

Die Erfindung betrifft ein Befestigungssystem mit einem Hintergreifteil zum Einführen in eine Montageöffnung eines Hohlkörpers in einer ersten Stellung und zum Hintergreifen von im Hohlkörper vorgesehenen Haltevorsprüngen in einer zweiten Stellung, sowie mit zumindest einem Anschlag zur stirnaussenseitigen Beaufschlagung der, die Montageöffnung begrenzenden Ränder der Hohlkörperlängsseiten. Der Anschlag ist mit dem Hintergreifteil mittels eines Befestigungsmittels verbunden. Eine Einrichtung zum Induzieren einer relativen Drehbewegung ist zwischen dem Anschlag und dem Hintergreifteil um die Achse des Befestigungsmittels vorgesehen.

### Stand der Technik

Befestigungssysteme der genannten Art dienen zum Befestigen eines Gegenstandes beispielsweise auf einer, z. B. an einem Untergrund befestigten C-förmigen Montageschiene. Das Befestigungssystem wird in die Montageöffnung der Montageschiene eingeführt und um einen Winkel von beispielsweise 90° verdreht. Dadurch hintergreift das Hintergreifteil des Befestigungssystems die Haltevorsprünge der Montageschienen. In dieser Vorfixierung ist es möglich das Befestigungssystem in Längsrichtung der Montageschiene zur endgültigen Positionierung an der Montageschiene zu verschieben. Um eine Befestigung des Befestigungssystems an der Montageschiene zu bewirken, wird das Hintergriffteil gegenüber dem Anschlag, z. B. durch eine Gewindestange, verspannt und damit an den Haltevorsprüngen festgeklemmt Diese Gattung von Befestigungssystemen eignet sich zum Befestigen von länglichen Gegenständen und Leitungssträngen, wie Rohrleitungen oder dergleichen. Ein derartiges Befestigungssystem ist beispielsweise in der DE 197 36 933 A1 bekannt.

Zur Befestigung eines Leitungsstrangs an einem Hohlkörper muss eine Vielzahl von Befestigungssystemen an dem Hohlkörper gesetzt werden. Einerseits um den Setzvorgang der einzelnen Befestigungssysteme zu beschleunigen und bei jedem Befestigungssystem die einwandfreie Ausrichtung des Hintergreifteils zu gewährleisten, wurde beispielsweise in der DE 196 17 750 C1 eine Verankerungseinheit vorgeschlagen, bei der zwischen dem Anschlag und dem, drehbar mit dem Anschlag verbundenen Hintergreifteil eine durch Verdrehen dieser beiden Teile relativ zueinander spannbare Rückstellfeder vorgesehen ist. Die Rückstellfeder baut beim Verdrehen eine Rückstellkraft auf. An dem Anschlag sind Drehbegrenzungsanschläge vorgesehen. Sobald sich das Hintergreifteil beim Setzvorgang der Verankerungseinheit im Innern des Hohlkörpers befindet, wird dieses durch die Rückstellkraft der Rückstellfeder zum Hintergreifen der Ränder des Hohlkörpers ausgerichtet.

Nachteilig an der bekannten Lösung ist, dass die Verankerungseinheit weiterhin nach dem Einführen in die Montageöffnung der Montageschiene um einen bestimmten Winkel verdreht werden muss, um die Haltevorsprünge optimal zu hintergreifen. Insbesondere an schlecht zugänglichen Stellen wirkt sich dieser Umstand nachteilig bei der Montage der Verankerungseinheit aus.

### Darstellung der Erfindung

Der vorliegenden Erfindung liegt die Aufgabe zugrunde, ein Befestigungssystem mit einem verdrehbaren Hintergriffteil zu schaffen, das eine Vorfixierung an einem Hohlkörper ohne eine Verdrehung um einen bestimmten Winkel des Befestigungssystems ermöglicht, wobei eine korrekte Positionierung des Hintergreifteils gegenüber den Haltevorsprüngen sichergestellt ist. Ferner soll das Befestigungssystem wirtschaftlich herstellbar sein und eine einfache Montage gewährleisten.

Die Aufgabe ist durch die Merkmale des Anspruchs 1 gelöst. Gemäss der Erfindung umfasst ein Befestigungssystem ein Hintergreifteil zum Einführen in eine Montageöffnung eines Hohlkörpers in einer ersten Stellung und zum Hintergreifen von im Hohlkörper vorgesehenen Haltevorsprüngen in einer zweiten Stellung, sowie zumindest einem Anschlag zur stimaussenseitigen Beaufschlagung der, die Montageöffnung begrenzenden Ränder der Hohlkörperlängsseiten. Der Anschlag ist mit dem Hintergreifteil mittels eines Befestigungsmittels verbunden. Eine Einrichtung zum Induzieren einer relativen Drehbewegung ist zwischen dem Anschlag und dem Hintergreifteil um die Achse des Befestigungsmittels vorgesehen. Die Einrichtung ist als Getriebeeinrichtung ausgebildet zur Umsetzung einer translatorischen Bewegung des Befestigungsmittels relativ zum Anschlag in eine rotatorische Bewegung des Hintergreifteils relativ zum Anschlag.

Mittels der Getriebeeinrichtung reicht beispielsweise eine Druckbewegung auf das Befestigungsmittel aus, um das, in den Hohlkörper durch die Montageöffnung eingeführte Befestigungssystem an dem Hohlkörper zu fixieren. Die Getriebeeinrichtung bestimmt den Grad der Umsetzung der translatorischen Bewegung in eine rotatorische Bewegung, womit die Verdrehung des Hintergreifteils relativ zur Montageöffnung definiert wird. Die Stellung des Hintergreifteils wird durch das elastisch beaufschlagte Element und die Getriebeeinrichtung bestimmt. Somit ist die Ausrichtung des Hintergreifteils auch bei ungenauer Konstruktion des Hohlkörpers gewährleistet. Der Anwender hat die Sicherheit, dass das Hintergreifteil korrekt zum Hintergreifen der Haltevorsprünge ausgerichtet wird. Eine Verdrehung beispielsweise des Anschlags oder des Befestigungsmittels entfällt, weshalb das erfindungsgemässe Befestigungssystem auch in schwer zugänglichen Montageorten einsetzbar ist. Anschliessend wird mittels des Befestigungsmittels das Befestigungssystem verspannt und lösbar an dem Hohlkörper befestigt. Wird das erfindungsgemässe Befestigungssystem in einer, als Langloch ausgebildeten Montageöffnung oder einer Montageöffnung einer C-förmigen Montageschiene angeordnet, kann das Befestigungssystem nach der Vorfixierung entlang der Längsachse des Hohlkörpers verschoben und in der gewünschten Position mit dem Hohlkörper mittels dem Befestigungsmittel verspannt werden.

Vorzugsweise umfasst die Getriebeeinrichtung eine Kulisse und ein elastisch beaufschlagtes Element, wobei das elastisch beaufschlagte Element in die Kulisse der Getriebeeinrichtung eingreift. Die Kulisse bildet die Führung und gibt den Grad der durch die translatorische Bewegung des Befestigungsmittels resultierende rotatorische Bewegung des Hintergreifteils vor. Das elastisch beaufschlagte Element greift die Führung der Kulisse ab. Durch die elastische Beaufschlagung dieses Elements kann beispielsweise die Kulisse in radialer Richtung relativ zum Befestigungsmittel eine variierende Erstreckung aufweisen, ohne dass der Kontakt zwischen der Kulisse und dem, in die Kulisse eingreifenden Element während der gesamten rotatorischen Bewegung unterbrochen ist.

Bevorzugt weist die Kulisse der Getriebeeinrichtung ein Gefälle auf, das von der ersten Stellung des Befestigungssystems in die zweite Stellung verläuft. Die erste Stellung ist beispielsweise eine sogenannte Transportstellung, in der das Befestigungssystem transportiert, gelagert und in die Montageöffnung des Hohlkörpers eingeführt wird. Die zweite Stellung ist beispielsweise die sogenannte Sicherungsstellung, in der das Hintergreifteil des Befestigungssystems zum Hintergreifen der, in dem Hohlkörper vorgesehen Haltevorsprünge ausgerichtet ist. Um ein einwandfreies Ausrichten des Hintergreifteils beim Setzvorgang des Befestigungssystems zu gewährleisten, ist es insbesondere aus Gründen der konstruktiven Ausgestaltung vorteilhaft, wenn die rotatorische Bewegung zu Beginn stärker als am Ende erfolgt. Des Weiteren wird dem Anwender durch diese Ausgestaltung der Kulisse sensorisch vermittelt, dass das Hintergreifteil zum Hintergreifen der Haltevorsprünge ausgerichtet ist.

Mittels des Gefälles der Kulisse kann der Drehwinkel über den ganzen Verlauf der Kulisse gesteuert werden. Beispielsweise ist an der Kulisse ein stetiges Gefälle vorgesehen.

Vorteilhafterweise weist das Hintergreifteil einen, in Richtung des Anschlags ausgerichteten Schaft auf, wobei die Kulisse der Getriebeeinrichtung an dem Schaft, optional als Nut, ausgebildet ist, wobei die Kulisse eine Abflachung umfasst. Die Kulisse kann an dem Schaft beispielsweise eingefräst oder mittels eines Lasers ausgebildet werden. Der Kulissenboden der Kulisse bildet beispielsweise durch eine zunehmende, beziehungsweise abnehmende Tiefe der Nut an dem Schaft ein Gefälle aus. Durch die Ausbildung der Kulisse als Nut wird z. B. die Führung des elastisch beaufschlagten Elements in bevorzugter Weise sichergestellt. Ein unbeabsichtigtes Herausgleiten des elastisch beaufschlagte Elements aus der Kulisse ist bei dieser Ausführungsform weitgehend ausgeschlossen. Die Abflachung stellt im Wesentlichen einen Gefällswechsel dar, der die rotatorische Bewegung des Hintergreifteils vor dem Erreichen der zweiten, beziehungsweise der Sicherungsstellung gegenüber der Initialdrehung beim Einleiten der rotatorischen Bewegung reduziert.

In einer erfindungsgemässen Variante zu der Anordnung des Schafts am Hintergreifteil weist der Anschlag einen, in Richtung des Hintergreifteils ausgerichteten Schaft auf, wobei die Kulisse der Getriebeeinrichtung an dem Schaft, optional als Nut, ausgebildet ist, wobei die Kulisse eine Abflachung umfasst.

Der Schaft, ist er nun am Hintergreifteil oder am Anschlag vorgesehen, ermöglicht bei einer geringen Anpassung des Befestigungssystems einen weiten Anwendungsbereich des Befestigungssystems zur Anordnung an verschieden ausgestalteten Hohlkörpern. Beispielsweise sind bei C-förmigen Montageschienen die Haltevorsprünge durch Umbiegen den freien Rändern nach innen, der parallel zueinander verlaufenden Seitenwänden ausgeformt. Die Haltevorsprünge weisen je nach Hersteller, verwendeten Material oder Grösse der Montageschiene unterschiedliche Abmessungen auf. Anstelle der zur Verfügungstellung einer Vielzahl von auf die verschiedenen Typen von Montageschienen abgestimmten Befestigungssystemen kann mit einer geringen Anzahl von, mit dem Schaft versehenen Teilen des Befestigungssystems diese Vielzahl von Montageschienen, aber auch sonstigen Hohlkörpern abgedeckt werden. Ist der Schaft z. B. an dem Hintergreifteil ausgebildet, wird dieses Hintergreifteil in Abhängigkeit der Erstreckung der Haltevorsprünge in Richtung der Setzrichtung des Befestigungssystems ausgewählt. Bei einer Anordnung des Schafts am Anschlag wird dieser entsprechend ausgetauscht. Diese Ausführungsform des erfindungsgemässen Befestigungssystems reduziert die Kosten wesentlich zu den bekannten Ausführungen von Befestigungssystemen, da nicht mehr für jeden Typ und Art von Hohlkörpern jeweils ein exakt, nur auf diesen Hohlkörper abgestimmtes Befestigungssystem zur Verfügung gestellt werden muss.

Vorteilhafterweise beträgt die Änderung des Gefälles zur Abflachung 5° bis 50°, vorzugsweise 15° bis 45°. Damit wird das sensorische Empfinden des Anwenders bezüglich der Ausrichtung des Hintergreifteils im Hohlkörper beim Setzvorgang des erfindungsgemässen Befestigungssystems verstärkt.

Vorzugsweise ist die Nut und/oder die Abflachung an dem Schaft wendelförmig ausgebildet. Bei dieser Ausführungsform erfolgt neben der rotatorischen Bewegung eine translatorische Bewegung des Hintergreifteils. Somit kann der Abstand zwischen dem Hintergreifteil und dem Anschlag in der ersten Stellung, beziehungsweise Transportstellung geringer als die Erstreckung der Haltevorsprünge in Richtung der Setzrichtung des Befestigungssystems ausgebildet sein. Die Steigung der wendelförmigen Nut und/oder der Abflachung bestimmt den Weg der translatorischen Bewegung des Hintergreifteils. Die Steigung muss zumindest die Differenz zwischen dem Abstand zwischen dem Hintergreifteil und dem Anschlag und der Erstreckung der Haltevorsprünge in Richtung der Setzrichtung des Befestigungssystems entsprechen, so dass das Hintergreifteil in der zweiten Stellung, beziehungsweise in der Sicherungsstellung die Haltevorsprünge hintergreifen kann.

Bevorzugt weist die Getriebeeinrichtung zumindest zwei, vorzugsweise diametral gegenüberliegend angeordnete Kulissen auf, wobei jede Kulisse von einem elastisch beaufschlagten Element abgegriffen wird. Mit zwei Kulissen ist eine hohe Gebrauchstauglichkeit des Befestigungssystem gegeben, da eine unerwünschte Verkantung bei der Betätigung der Getriebeeinrichtung weitgehend vermieden wird. Dies ist insbesondere vorteilhaft, wenn das Befestigungssystem mehrmals verwendet wird.

Vorteilhafterweise ist an zumindest einer der angeordneten Kulissen der Getriebeeinrichtung vor dem Gefälle eine Steigung vorgesehen. Durch die angeordnete Steigung ergeben sich im Wesentlichen zwei Vorteile. Einerseits verhindert die Steigung eine unabsichtliche Betätigung, beziehungsweise eine selbstständige Betätigung des Befestigungssystems in der Transportstellung. Andererseits wird die sensorische Rückmeldung bei Betätigung des Befestigungssystems an den Anwender verstärkt. Damit die rotatorische Bewegung in die gewünschte Drehrichtung eingeleitet wird, muss zuerst der, durch die Steigung vorhandene Widerstand beim Einleiten der translatorischen Bewegung überwunden werden. Da der Druck zur Initialisierung der translatorischen Bewegung auf das Befestigungsmittel nach der Überwindung der Steigung infolge des Reaktionsvermögens des Anwenders nicht sofort reduziert wird, ist infolge der daraus resultierenden rotatorischen Bewegung des Hintergreifteils das Hintergreifen der Haltevorsprünge durch das Hintergreifteil gewährleistet. Eine ungenügende Ausrichtung des Hintergreifteils relativ zu den Haltevorsprüngen, beispielsweise durch eine zu geringe Betätigung des Befestigungsmittels ist weitgehend ausgeschlossen.

Vorzugsweise umfasst die Getriebeeinrichtung zumindest zwei Kulissenabschnitte, wobei der erste Kulissenabschnitt ein axial zunehmendes Gefälle aufweist und der zumindest eine weitere Kulissenabschnitt ein, entgegengesetzt zum Gefälle des ersten Kulissenabschnitts ausgerichtetes Gefälle aufweist, wobei der zweite Kulissenabschnitt sich an den ersten Kulissenabschnitt anschliesst. Mit dem ersten Kulissenabschnitt wird das Hintergreifteil in das Innere des Hohlkörpers geführt, so dass sich der Abstand zwischen dem Hintergreifteil und dem Anschlag bis zum Erreichen der Erstreckung der zu hintergreifenden Haltevorsprünge vergrössert, und unter die Haltevorsprünge gedreht. Der Wechsel vom ersten Kulissenabschnitt zum zweiten Kulissenabschnitt stellt ein Knick-, beziehungsweise ein Wendepunkt dar. Das Hintergreifteil wird gegebenenfalls durch die Führung im zweiten Kulissenabschnitt noch weiter unter die Haltevorsprünge gedreht, doch wird der Abstand zwischen dem Hintergreifteil und dem Anschlag vorzugsweise kontinuierlich reduziert, bis das Hintergreifteil die Haltevorsprünge fest hintergreift.

Bevorzugt verläuft der zumindest eine weitere Kulissenabschnitt parallel zur Längsachse des Befestigungsmittels. Wenn der erste Kulissenabschnitt derart ausgebildet ist, dass das Hintergreifteil beim Erreichen des Knick-, beziehungsweise des Wendepunkts der Kulisse die gewünschte Position zum Hintergreifen der Haltevorsprünge erreicht hat, dient der zweite Kulissenabschnitt nur noch der Reduktion des Abstands zwischen dem Hintergreifteil zum Anschlag.

Vorteilhafterweise ist das Hintergreifteil durch einen Bolzen mit dem Anschlag verbunden, wobei das Hintergreifteil reibschlüssig oder kraftschlüssig und der Anschlag drehbar mit dem Bolzen verbunden ist, wobei der Bolzen an dem, dem Hintergreifteil abgewandten Ende ein Drehmomentübertragungsmittel aufweist, das den Anschlag zumindest teilweise radial überragt. Das Befestigungsmittel umfasst beispielsweise eine Schraube mit einem Sechskantkopf.

Vorzugsweise ist das elastisch beaufschlagte Element ein federbeaufschlagtes Element und umfasst eine federbeaufschlagte Führungsspitze, optional einen Federbügel. Das elastisch beaufschlagte Element ist beispielsweise an dem Anschlag angeordnet, wenn die Kulisse an dem Hintergreifteil vorgesehen ist. Entsprechend ist das elastisch beaufschlagte Element bevorzugt am Hintergreifteil angeordnet, wenn die Kulisse an dem Anschlag vorgesehen ist. Das elastisch beaufschlagte Element ist fest an dem entsprechenden Teil angeordnet, so dass eine Bewegung z. B. der federbeaufschlagten Führungsspitze zum Abgreifen der Kulisse gewährleistet ist, aber das elastisch beaufschlagte Element sich nicht von dem Teil des Befestigungssystems lösen kann, an dem es angeordnet ist. Ein bevorzugt nach innen vorgespannter Federbügel kann einseitig zum Eingriff in die Kulisse wirken oder vorzugsweise zwei, diametral gegenüberliegend angeordnete Kulissen als einteiliges Element abgreifen. Insbesondere bei der Ausführung des Hintergreifteils oder des Anschlags mit einem Schaft und zwei, diametral gegenüberliegend, an diesem Schaft angeordneten Kulissen wird vorzugsweise ein im Wesentlichen U-förmiger Federbügel als elastisch beaufschlagtes Element vorgesehen.

Bevorzugt ist zwischen dem Befestigungssystem und dem Anschlag ein federbeaufschlagtes Element vorgesehen. Das federbeaufschlagte Element ist beispielsweise als Blattfeder mit einer Öffnung zur Durchführung des Befestigungsmittels ausgebildet, deren freien Enden sich an dem Anschlag abstützen. Als Befestigungsmittel wird vorzugsweise eine Metallbauschraube verwendet, deren Kopf den Durchmesser des Gewindebereichs in radialer Richtung überragt. Somit wird beim Niederdrücken des Befestigungssystems die Blattfeder gespannt, durch Lösen des Drucks auf das Befestigungsmittel entspannt sich die Feder und hebt das Befestigungsmittel sowie das, im Innern des Hohlkörpers ausgerichtete Hintergreifteil an, bis das Hintergreifteil mit den Haltevorsprüngen in Eingriff steht. Diese Ausführung ist besonders zur Anordnung des erfindungsgemässen Befestigungssystems an einer C-förmigen Montageschiene vorteilhaft. Das sich in der Sicherungsstellung befindliche Befestigungssystem kann das Hintergreifteil durch einen erneuten Druck auf das Befestigungsmittel aus dem Eingriff mit den Haltevorsprüngen gebracht und entlang der Montageöffnung in Längsrichtung der Montageschiene umpositioniert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1a-d: Ein erstes Ausführungsbeispiel des erfindungsgemässen Befestigungssystems in vier Einzelschritten des Setzvorgangs in Schnittdarstellungen;
- Fig. 2a: einen Querschnitt durch die Kulissenausgestaltung des ersten Ausführungsbeispiels entlang der Linie IIa-IIa in Fig. 1a;
- Fig. 2b: einen Querschnitt durch die Kulissenausgestaltung des ersten Ausführungsbeispiels entlang der Linie IIb-IIb in Fig. 1d;
- Fig. 3a, b: jeweils einen Querschnitt durch eine Variante zu der, in den Fig. 2 a und b gezeigten Kulissenausgestaltung;
- Fig. 4: eine Seitenansicht auf eine weitere Kulissenausgestaltung;
- Fig. 5a, b: jeweils eine Aufsicht, teilweise quergeschnitten, entlang der Schnittline V-V in der Fig. 4;
- Fig. 6: eine Seitenansicht auf eine weitere Kulissenausgestaltung; und
- Fig. 7: eine Aufsicht, teilweise quergeschnitten, entlang der Schnittline VII-VII in der Fig. 6.

Grundsätzlich sind in den Figuren gleiche Teile mit den gleichen Bezugszeichen versehen.

### Wege zur Ausführung der Erfindung

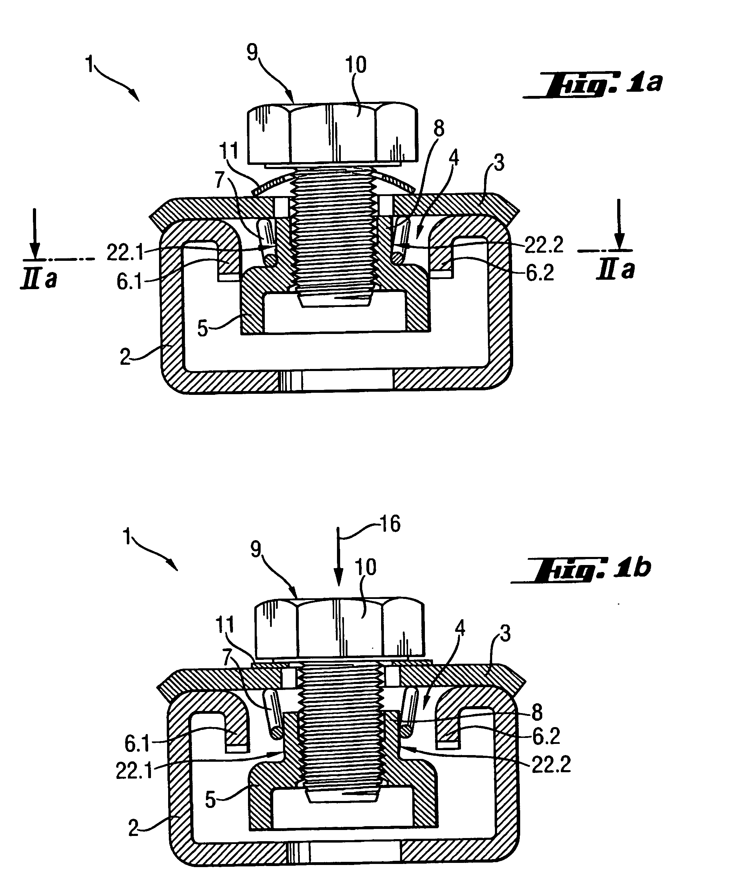

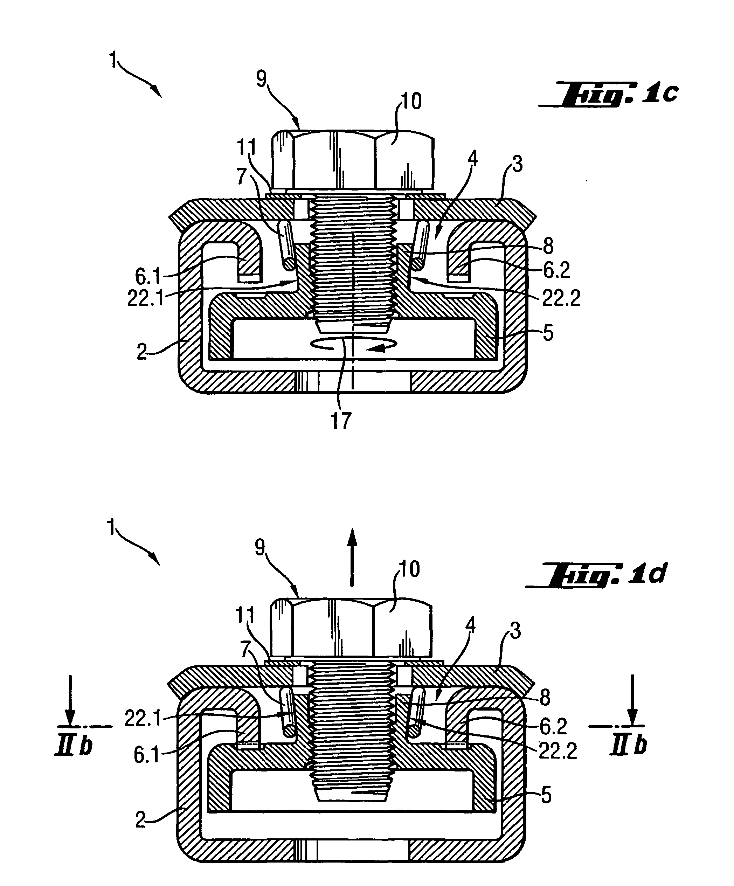

In den Fig. 1a-d ist ein erstes Ausführungsbeispiel des erfindungsgemässen Befestigungssystems in vier Einzelschritten des Setzvorgangs gezeigt. Das Befestigungssystem 1 ist in der Fig. 1a nach dem Einführen in den, als Montageschiene ausgebildeten Hohlkörper 2 gezeigt. Der Anschlag 3 liegt an den, die Montageöffnung 4 begrenzenden Rändern an dem, als Montageschiene ausgebildeten Hohlkörper 2 an. In dieser Stellung ist der Abstand zwischen dem Hintergreifteil 5 und dem Anschlag 3 nicht ausreichend, damit das Hintergreifteil 5 in dieser Position unter die Haltevorsprünge 6.1 und 6.2 gedreht werden kann.

Zwischen dem Anschlag 3 und dem Hintergreifteil 5 ist ein Federbügel als elastisch beaufschlagtes Element 7 vorgesehen, der in zwei, diametral gegenüberliegend an dem Schaft 8 angeordneten Kulissen 22.1, 22.2 eingreift. Das Zusammenspiel zwischen der Federbügel und der, beziehungsweise den Kulissen 22.1, 22.2 wird nachfolgend noch detailliert ausgeführt.

Das Hintergreifteil 5 ist fest mit dem, als Schraube ausgebildeten Befestigungsmittel 9 verbunden, die durch den Anschlag 3 drehbar hindurchgeführt ist. Zwischen dem, als Drehmomentübertragungsmittel 10 dienende Schraubenkopf und dem Anschlag 3 ist ein, als Blattfeder ausgebildetes federbeaufschlagtes Element 11 vorgesehen.

Durch Ausübung eines Drucks auf den Schraubenkopf in Richtung des Pfeils 16 wird das Hintergreifteil 5 des Befestigungssystems 1 in das Innere des Hohlkörpers 2 bewegt, was in Fig. 1b dargestellt ist. Der Abstand zwischen dem Hintergreifteil 5 und dem Anschlag 3 wird dabei derart vergrössert, dass das Hintergreifteil 5 nach einer Drehung die Haltevorsprünge 6.1 und 6.2 hintergreifen kann.

Durch den, die Kulissen 22.1, 22.2 abgreifende Federbügel wird das Hintergreifteil 5 entsprechend der Ausbildung der Kulissen 22.1, 22.2 in Richtung des Pfeils 17 abgedreht. Das zum Hintergreifen der Haltevorsprünge 6.1 und 6.2 ausgerichtete Halteelement 5 ist in Fig. 1c gezeigt. Die Haltevorsprünge 6.1 und 6.2 sind an deren freien Rändern und das Hintergreifteil 5 im Eingriffsbereich mit den Haltevorsprüngen 6.1 und 6.2 zur Gewährleistung eines besseren Eingriffs miteinander jeweils mit einer Rändelung versehen. An dieser Stelle sei festgehalten, dass das Hintergreifteil 5 bei der Betätigung der Schraube entsprechend der Ausbildung der Kulisse 22.1, 22.2 fortlaufend translatorisch und rotatorisch bewegt, beziehungsweise abgedreht wird. Zum besseren Verständnis der Erfindung ist die translatorische Bewegung des Hintergreifteils 5 in Fig. 1b und die rotatorische Bewegung in Fig. 1c dargestellt.

Durch Lösen des Drucks auf die Schraube wird diese beispielsweise mittels der Blattfeder angehoben und die gerändelten Bereiche des Hintergreifteils 5 greifen in die Rändelungen an den Haltevorsprüngen 6.1 und 6.2 ein. Zur Umpositionierung des Befestigungssystems 1 in dem, als Montageschiene ausgebildeten Hohlkörper 2 wird erneut Druck auf die, als Befestigungsmittel 9 dienende Schraube ausgeübt, wobei sich der Eingriff zwischen dem Hintergreifteil 5 und den Haltevorsprüngen 6.1 und 6.2 löst. Diese translatorische Bewegung reicht vorzugsweise nicht aus, um das Hintergreifteil 5 derart zu drehen, dass dieses nicht mehr mit den Haltevorsprüngen 6.1 und 6.2 in Eingriff gebracht werden kann. Das Befestigungssystem 1 wird bei heruntergedrückter Schraube entlang der Montageöffnung 4 in Längsrichtung der Montageschiene verschoben werden, bis die gewünschte Position des Befestigungssystems 1 in der Montageschiene erreicht ist. Durch erneutes Loslassen der Schraube kommt das Hintergreifteil 5 mit den Haltevorsprüngen 6.1 und 6.2 erneut in Eingriff. Durch Anziehen der Schraube wird das Hintergreifteil 5 mit den Haltevorsprüngen 6.1 und 6.2 zur Fixierung des Befestigungssystems 1 verspannt.

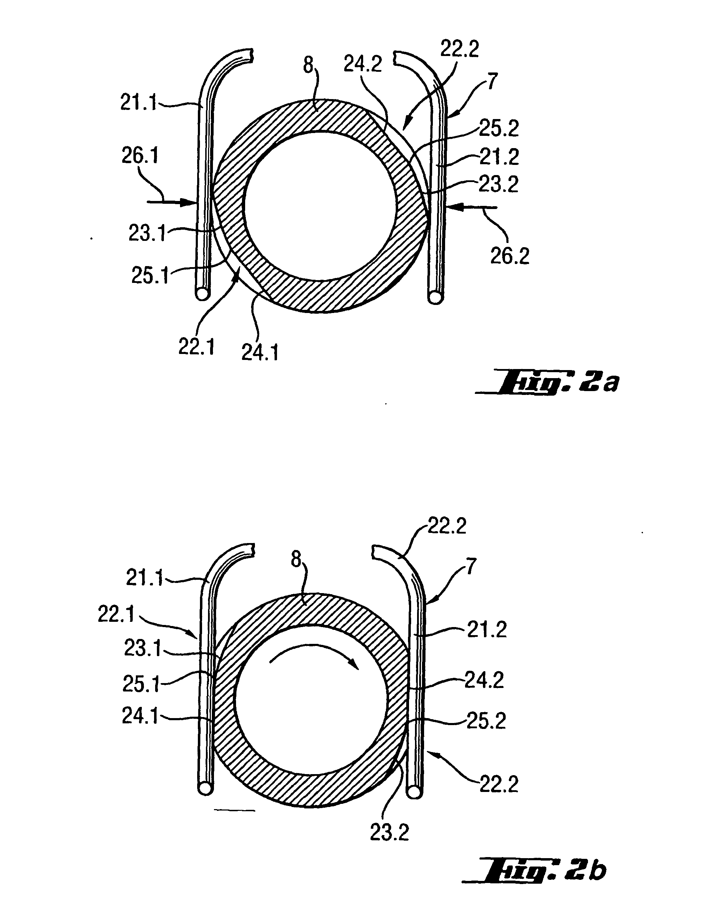

Die Fig. 2a zeigt einen Schnitt durch die Kulissenausgestaltung 22.1, 22.2 des ersten Ausführungsbeispiels entlang der Linie IIa-IIa in Fig. 1a. Der als elastisch beaufschlagtes Element 7 dienende Federbügel ist aus einem Federstahl hergestellt, so dass der nach innen (in Richtung der Pfeile 26.1 und 26.2 wirkend) vorgespannte Federbügel mit dessen Schenkel 21.1 und 21.2 mit den, am Schaft 8 ausgebildeten Kulissen 22.1, bzw. 22.2 in dauerndem Eingriff stehen. Nachfolgend wird die Kulisse 22.1 im Detail beschrieben. Die dazu gemachten Aussagen gelten für die, diametral dieser Kulisse 22.1 gegenüberliegende Kulisse 22.2 entsprechend.

Die Kulisse 22.1 verläuft axial entlang des Schafts 8 zunehmend und weist ein Gefälle 23.1 sowie eine Abflachung 24.1 auf. Das Gefälle 23.1 dient der Umsetzung der translatorischen Bewegung des Befestigungsmittels 9 in eine rotatorische Bewegung des Hintergreifteils 5. Mit dem Gefälle 23.1 wird sichergestellt, dass zu Beginn der Drehung des Hintergreifteils 5 dieses stärker als gegen Ende der Drehbewegung gedreht wird. Der Übergang zwischen dem Gefälle 23.1 und der Abflachung 24.1 stellt der Knickpunkt 25.1 der Kulisse 22.1 dar. Diesen Knickpunkt 25.1 nimmt der Anwender beim Setzen des Befestigungssystems 1 wahr. Damit wird dem Anwender die Sicherheit vermittelt, dass das Hintergreifteil zum Hintergreifen der Haltevorsprünge der Montageschiene ausgerichtet ist und er den Druck von der Schraube nehmen kann.

Die Fig. 2b zeigt einen Schnitt durch die Kulissenausgestaltung 22.1, 22.2 des ersten Ausführungsbeispiels entlang der Linie IIb-IIb in Fig. 1d. Die Abflachung 24.1, bzw. 24.2 ist gegenüber dem Gefälle 23.1, bzw. 23.2 im Bereich eines Winkels von etwa 5° bis 50° abgedreht. Die Schenkel 21.1 und 21.2 des Federbügels liegen an den Abflachungen 24.1 und 24.2 an, so dass das Hintergreifteil 5 beim Verspannen im Wesentlichen in der vorgenommenen Ausrichtung verbleibt.

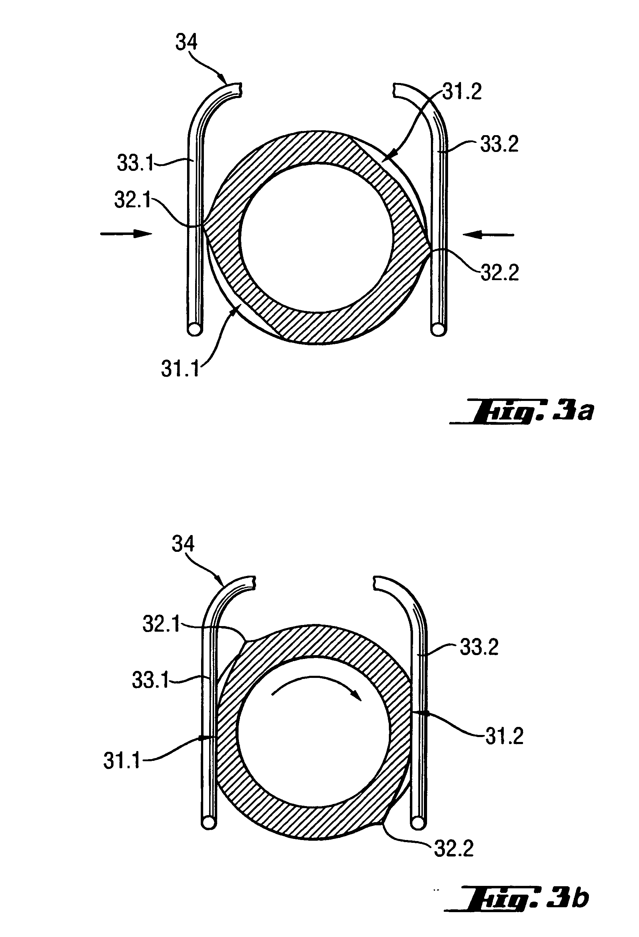

Jeweils einen Schnitt durch eine Variante zu der, in den Fig. 2a und b gezeigten Kulissenausgestaltung ist in den Fig. 3a und 3b dargestellt. Die Kulissen 31.1 und 31.2 weisen jeweils eine Nocke 32.1, bzw. 32.2 auf, an denen die Schenkel 33.1 und 33.2 des Federbügels 34 in der Transportstellung des Befestigungssystems anliegen. Zur Einleitung der Drehbewegung des Hintergreifteils muss zuerst der durch die Nocken 32.1 und 32.2 aufgebaute Widerstand durch Druck auf das Befestigungsmittel 9 überwunden werden. Dieser gegenüber der in den Fig. 2a und 2b benötigte Druck zur Einleitung der Drehbewegung des Hintergreifteils erhöhte benötigte Druck wird das Hintergreifteil nach der Überwindung des Widerstands infolge der Ausgestaltung der Kulissen 31.1 und 31.2 gedreht. Abgesehen von der Anordnung der als Steigung 32.1 und 32.2 dienenden Nocken sind die Kulissen 31.1 und 31.2 im Wesentlichen gleich wie die in Fig. 2a und 2b beschriebenen Kulissen 22.1 und 22.2 ausgebildet und weisen die gleiche Funktionsweise wie diese auf.

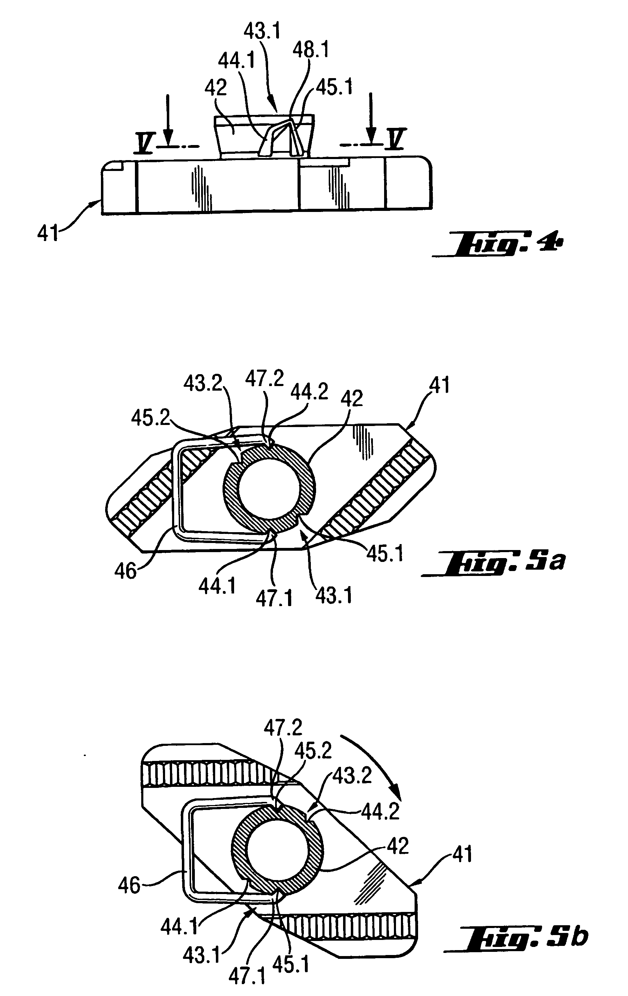

Fig. 4 zeigt eine Seitenansicht auf eine weitere Kulissenausgestaltung. Das Hintergreifteil 41 ist mit einem Schaft 42 versehen, an dem zwei, diametral gegenüberliegende Kulissen 43.1 (und hier nicht dargestellt 43.2) angeordnet sind. Die Kulisse 43.1 weist einen ersten Kulissenabschnitt 44.1 und einen zweiten Kulissenabschnitt 45.1 auf, wobei der zweite Kulissenabschnitt 45.1 ein, entgegengesetzt zum Gefälle des ersten Kulissenabschnitts 44.1 ausgerichtetes Gefälle aufweist und sich an den ersten Kulissenabschnitt 44.1 anschliesst.

In den Fig. 5a und 5b ist jeweils eine Ansicht entlang der Schnittline V-V in der Fig. 4 gezeigt. In der, in der Fig. 5a gezeigten Transportstellung des Hintergreifteils 41 greift der Federbügel 46 jeweils an dem Anfangspunkt des entsprechenden ersten Kulissenabschnitts, z. B. 44.1, an. Durch die translatorische Bewegung des Befestigungsmittels gleiten die freien Enden 47.1 und 47.2 des Federbügels 46 entlang des Kulissenbodens des ersten Kulissenabschnitts 44.1, bzw. 44.2, wodurch das Hintergreifteil 41 in das Innere des Hohlkörpers 2 geschoben und gleichzeitig unter die Haltevorsprünge des Hohlkörpers 2 gedreht wird. Sobald der Wendepunkt der Kulissen 43.1 und 43.2, beispielsweise der Wendepunkt 48.1 der Kulisse 43.1, erreicht ist, gleiten die freien Enden 47.1 und 47.2 in den zweiten Kulissenabschnitten 45.1, bzw. 45.2, was in der Fig. 5b dargestellt ist. Dabei hebt sich das unter die Haltevorsprünge ausgerichtete Hintergreifteil 41 in Richtung des Anschlags an, bis das Hintergreifteil mit den Haltevorsprüngen des Hohlkörpers in Eingriff steht.

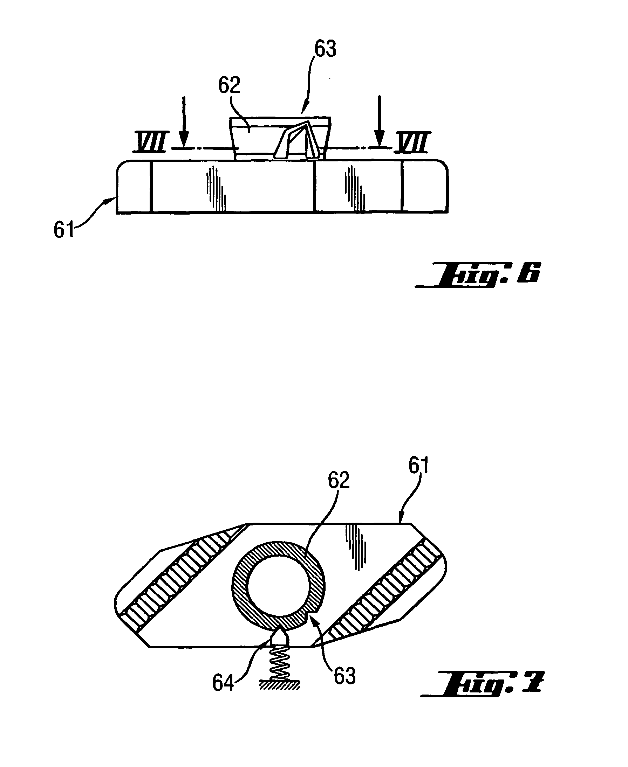

Fig. 6 zeigt eine Seitenansicht auf eine weitere Kulissenausgestaltung. Das Hintergreifteil 61 weist im Gegensatz zu dem zuvor in Fig. 4 beschriebenen Hintergreifteil 41 nur eine Kulisse 63 am Schaft 62 auf, die jedoch wie die Kulissen 43.1 und 43.2 ausgebildet ist.

In den Fig. 7 ist eine Ansicht entlang der Schnittline VII-VII in der Fig. 6 gezeigt. Anstelle von einem Abgriff mittels eines Federbügels wird die Kulisse 63 von einer federbeaufschlagten Führungsspitze 64 abgegriffen.

Zusammenfassend ist festzustellen, dass ein handliches, einfach montierbares Befestigungssystem mit einem verdrehbaren Hintergreifteil geschaffen wurde, das eine Vorfixierung erlaubt, die eine korrekte Positionierung des Hintergreifteils gegenüber den Haltevorsprüngen sicherstellt.

## Patentansprüche

1. Befestigungssystem mit einem Hintergreifteil (5; 41; 61) zum Einführen in eine Montageöffnung (4) eines Hohlkörpers (2) in einer ersten Stellung und zum Hintergreifen von im Hohlkörper (2) vorgesehenen Haltevorsprüngen (6.1, 6.2) in einer zweiten Stellung, sowie mit zumindest einem Anschlag (3) zur stirnaussenseitigen Beaufschlagung der, die Montageöffnung (4) begrenzenden Ränder der Hohlkörperlängsseiten, wobei der Anschlag (3) mit dem Hintergreifteil (5; 41; 61) mittels eines Befestigungsmittels (9) verbunden ist, und wobei eine Einrichtung zum Induzieren einer relativen Drehbewegung zwischen dem Anschlag (3) und dem Hintergreifteil (5; 41; 61) um die Achse des Befestigungsmittels (9) vorgesehen ist, **dadurch gekennzeichnet, dass** die Einrichtung als Getriebeeinrichtung ausgebildet ist zur Umsetzung einer translatorischen Bewegung des Befestigungsmittels (9) relativ zum Anschlag (3) in eine rotatorische Bewegung des Hintergreifteils (5; 41; 61) relativ zum Anschlag (3).

2. Befestigungssystem nach Anspruch 1, **dadurch gekennzeichnet, dass** die Getriebeeinrichtung eine Kulisse (22.1, 22.2; 31.1, 31.2; 43.1, 43.2; 63) und ein elastisch beaufschlagtes Element (7; 34; 46; 64) umfasst, wobei das elastisch beaufschlagte Element (7; 34; 46; 64) in die Kulisse (22.1, 22.2; 31.1, 31.2; 43.1, 43.2; 63) der Getriebeeinrichtung eingreift.

3. Befestigungssystem nach Anspruch 1 oder 2, **dadurch gekennzeichnet, dass** die Kulisse (22.1, 22.2; 31.1, 31.2; 43.1, 43.2; 63) der Getriebeeinrichtung ein Gefälle aufweist, das von der ersten Stellung des Befestigungssystems (1) in die zweite Stellung verläuft.

4. Befestigungssystem nach einem der Ansprüche 1 bis 3, **dadurch gekennzeichnet, dass** das Hintergreifteil (5; 41; 61) einen, in Richtung des Anschlags (3) ausgerichteten Schaft (8; 42; 62) aufweist, wobei die Kulisse (22.1, 22.2; 31.1, 31.2; 43.1, 43.2; 63) der Getriebeeinrichtung an dem Schaft (8; 42; 62), optional als Nut ausgebildet ist, wobei die Kulisse (22.1, 22.2; 31.1, 31.2; 43.1, 43.2; 63) eine Abflachung (24.1, 24.2) umfasst.

5. Befestigungssystem nach einem der Ansprüche 1 bis 3, **dadurch gekennzeichnet, dass** der Anschlag (3) einen, in Richtung des Hintergreifteils (5; 41; 61) ausgerichteten Schaft (8, 42, 62) aufweist, wobei die Kulisse (22.1, 22.2; 31.1, 31.2; 43.1, 43.2; 63) der Getriebeeinrichtung an dem Schaft, optional als Nut (23.1, 23.2; 44.1, 44.2, 45.1, 45.2), ausgebildet ist, wobei die Kulisse (22.1, 22.2; 31.1, 31.2; 43.1, 43.2; 63) eine Abflachung (24.1, 24.2) umfasst.

6. Befestigungssystem nach Anspruch 4 oder 5, **dadurch gekennzeichnet, dass** die Änderung des Gefälles zur Abflachung (24.1, 24.2) 5° bis 50°, vorzugsweise 15° bis 45°, beträgt.

7. Befestigungssystem nach einem der Ansprüche 4 bis 6, **dadurch gekennzeichnet, dass** die Nut und/oder die Abflachung (24.1, 24.2) an dem Schaft (8, 42, 62) wendelförmig ausgebildet ist.

8. Befestigungssystem nach einem der Ansprüche 1 bis 7, **dadurch gekennzeichnet, dass** die Getriebeeinrichtung zumindest zwei, vorzugsweise diametral gegenüberliegend angeordnete Kulissen (22.1, 22.2; 31.1, 31.2; 43.1, 43.2; 63) aufweist, wobei jede Kulisse (22.1, 22.2; 31.1, 31.2; 43.1, 43.2; 63) von einem elastisch beaufschlagten Element (7; 34; 46; 64) abgegriffen wird.

9. Befestigungssystem nach einem der Ansprüche 1 bis 8, **dadurch gekennzeichnet, dass** an zumindest einer der angeordneten Kulissen (31.1, 31.2) der Getriebeeinrichtung vor dem Gefälle eine Steigung (32.1, 32.2) vorgesehen ist.

10. Befestigungssystem nach einem der Ansprüche 1 bis 9, **dadurch gekennzeichnet, dass** die Getriebeeinrichtung zumindest zwei Kulissenabschnitte (44.1, 44.2, 45.1, 45.2) umfasst, wobei der erste Kulissenabschnitt (44.1, 44.2) ein axial zunehmendes Gefälle aufweist und der zumindest eine weitere Kulissenabschnitt (45.1, 45.2) ein, entgegengesetzt zum Gefälle des ersten Kulissenabschnitts (44.1, 44.2) ausgerichtetes Gefälle aufweist, wobei der zweite Kulissenabschnitt (45.1, 45.2) sich an den ersten Kulissenabschnitt (44.1, 44.2) anschliesst.

11. Befestigungssystem nach Anspruch 10, **dadurch gekennzeichnet, dass** der zumindest eine weitere Kulissenabschnitt (45.1, 45.2) parallel zur Längsachse des Befestigungsmittels (9) verläuft.

12. Befestigungssystem nach einem der Ansprüche 1 bis 11, **dadurch gekennzeichnet, dass** das Hintergreifteil (5; 41; 61) durch einen Bolzen mit dem Anschlag (3) verbunden ist, wobei das Hintergreifteil (5; 41; 61) reibschlüssig oder kraftschlüssig und der Anschlag (3) drehbar mit dem Bolzen verbunden ist, wobei der Bolzen an dem, dem Hintergreifteil (5; 41; 61) abgewandten Ende ein Drehmomentübertragungsmittel (10) aufweist, das den Anschlag (3) zumindest teilweise radial überragt.

13. Befestigungssystem nach einem der Ansprüche 1 bis 12, **dadurch gekennzeichnet, dass** das elastisch beaufschlagte Element ein federbeaufschlagtes Element (7; 34; 46) ist und eine federbeaufschlagte Führungsspitze (64), optional einen Federbügel umfasst.

14. Befestigungssystem nach einem der Ansprüche 1 bis 13, **dadurch gekennzeichnet, dass** zwischen dem Befestigungsmittel (9) und dem Anschlag (3) ein federbeaufschlagtes Element (11) vorgesehen ist.

## Claims

1. Fastening system featuring a rear engagement element (5; 41; 61) for introduction into a mounting aperture (4) on a hollow body (2) in a first position and for engaging behind retaining lugs (6.1, 6.2) provided in the hollow body (2) in a second position, and also featuring at least one limit stop (3) for acting, from the front outer side, on the edges of the hollow body's long sides, said edges delimiting the mounting aperture (4), the limit stop (3) being connected to the rear engagement element (5; 41; 61) by means of a fastener (9), and a device being provided for inducing a relative rotating motion between the limit stop (3) and the rear engagement element (5; 41; 61) about the axis of the fastener (9), **characterised in that** the device is configured as a gear mechanism for converting a translatory motion of the fastener (9) relative to the limit stop (3) into a rotatory motion of the rear engagement element (5; 41; 61) relative to the limit stop (3).

2. Fastening system according to claim 1, **characterised in that** the gear mechanism includes a shifting gate (22.1, 22.2; 31.1, 31.2; 43.1, 43.2; 63) and a flexibly actuated element (7; 34; 46; 64), and the flexibly actuated element (7; 34; 46; 64) engages in the shifting gate (22.1, 22.2; 31.1, 31.2; 43.1, 43.2; 63) of the gear mechanism.

3. Fastening system according to claim 1 or 2, **characterised in that** the shifting gate (22.1, 22.2; 31.1, 31.2; 43.1, 43.2; 63) of the gear mechanism has a gradient that extends from the first position of the fastening system (1) into the second position.

4. Fastening system according to any one of claims 1 to 3, **characterised in that** the rear engagement element (5; 41; 61) has a shank (8; 42; 62) orientated in the direction of the limit stop (3); the shifting gate (22.1, 22.2; 31.1, 31.2; 43.1, 43.2; 63) of the gear mechanism being configured on the shank (8; 42; 62), optionally as a slot, and the shifting gate (22.1, 22.2; 31.1, 31.2; 43.1, 43.2; 63) includes a flattened area (24.1, 24.2).

5. Fastening system according to any one of claims 1 to 3, **characterised in that** the limit stop (3) has a shank (8, 42, 62) orientated in the direction of the rear engagement element (5; 41; 61); the shifting gate (22.1, 22.2; 31.1, 31.2; 43.1, 43.2; 63) of the gear mechanism being configured on the shank, optionally as a slot (23.1, 23.2; 44.1, 44.2, 45.1, 45.2); and the shifting gate (22.1, 22.2; 31.1, 31.2; 43.1, 43.2; 63) includes a flattened area (24.1, 24.2).

6. Fastening system according to claim 4 or 5, **characterised in that** the variation in the gradient to the flattened area (24.1, 24.2) is 5° to 50°, preferably 15° to 45°.

7. Fastening system according to any one of claims 4 to 6, **characterised in that** the slot and/or the flattened area (24.1, 24.2) is configured on the shank (8, 42, 62) in the manner of a helix.

8. Fastening system according to any one of claims 1 to 7, **characterised in that** the gear mechanism incorporates at least two, preferably diametrically opposed shifting gates (22.1, 22.2; 31.1, 31.2; 43.1, 43.2, 63); and each shifting gate (22,1, 22.2; 31.1, 31.2; 43.1, 43.2; 63) is picked up by a flexibly actuated element (7; 34; 46, 64).

9. Fastening system according to any one of claims 1 to 8, **characterised in that** on at least one of the positioned shifting gates (31,1, 31.2) of the gear mechanism a slope (32.1, 32.2) is provided in advance of the gradient.

10. Fastening system according to any one of claims 1 to 9, **characterised in that** the gear mechanism includes at least two shifting gate sections (44.1, 44.2, 45.1, 45.2); the first shifting gate section (44.1, 44.2) having an axially increasing gradient and the not less than one additional shifting gate section (45.1, 45.2) having a gradient orientated in the opposite direction to the gradient of the first shifting gate section (44.1, 44.2); with the second shifting gate section (45.1, 45.2) being contiguous with the first shifting gate section (44.1, 44.2).

11. Fastening system according to claim 10, **characterised in that** the not less than one additional shifting gate section (45.1, 45.2) extends parallel to the longitudinal axis of the fastener (9).

12. Fastening system according to any one of claims 1 to 11, **characterised in that** the rear engagement element (5; 41; 61) is joined to the limit stop (3) by a pin; the rear engagement element (5; 41; 61) being connected to the pin in a friction-fit or force-fit and the limit stop (3) rotatably thereto; and the pin having on the end that is remote from the rear engagement element (5; 41; 61) a torque transmission means (10) which projects radially at least partly beyond the limit stop (3).

13. Fastening system according to any one of claims 1 to 12, **characterised in that** the flexibly actuated element is a spring-actuated element (7; 34; 46) and includes a spring-actuated guide tip (64), optionally a spring stirrup.

14. Fastening system according to any one of claims 1 to 13, **characterised in that** a spring-actuated element (11) is provided between the fastener (9) and the limit stop (3).

## Revendications

1. Système de fixation comprenant une pièce de retenue arrière (5 ; 41 ; 61) destinée à être introduite dans une ouverture de montage (4) d'un corps creux (2) dans une première position et à s'engager derrière des saillies de retenue (6.1, 6.2) prévues dans le corps creux (2) dans une seconde position, et comprenant au moins une butée (3) pour solliciter le côté frontal extérieur des bords des côtés longitudinaux du corps creux qui délimitent l'ouverture de montage (4), la butée (3) étant reliée à la pièce de retenue arrière (5 ; 41 ; 61) à l'aide d'un moyen de fixation (9), et un dispositif étant prévu pour induire un mouvement de rotation relatif entre la butée (3) et la pièce de retenue arrière (5 ; 41 ; 61) autour de l'axe du moyen de fixation (9), **caractérisé en ce que** le dispositif est conformé en dispositif à mécanisme pour convertir un mouvement de translation du moyen de fixation (9) par rapport à la butée (3) en un mouvement de rotation de la pièce de retenue arrière (5 ; 41 ; 61) par rapport à la butée (3).

2. Système de fixation selon la revendication 1, **caractérisé en ce que** le dispositif à mécanisme comporte une coulisse (22.1, 22.2 ; 31.1, 31.2 ; 43.1, 43.2 ; 63) et un élément sollicité élastiquement (7 ; 34 ; 46 ; 64), l'élément sollicité élastiquement (7 ; 34 ; 46 ; 64) s'engageant dans la coulisse (22.1, 22.2 ; 31.1, 31.2 ; 43.1, 43.2 ; 63) du dispositif à mécanisme.

3. Système de fixation selon la revendication 1 ou 2, **caractérisé en ce que** la coulisse (22.1, 22.2 ; 31.1, 31.2 ; 43.1, 43.2 ; 63) du dispositif à mécanisme présente une pente qui s'étend de la première position du système de fixation (1) à la seconde position.

4. Système de fixation selon une des revendications 1 à 3, **caractérisé en ce que** la pièce de retenue arrière (5 ; 41 ; 61) comporte une tige (8 ; 42 ; 62) orientée en direction de la butée (3), la coulisse (22.1, 22.2 ; 31.1, 31.2 ; 43.1, 43.2 ; 63) du dispositif à mécanisme étant conformée sur la tige (8 ; 42 ; 62), optionnellement en rainure, la coulisse (22.1, 22.2 ; 31.1, 31.2 ; 43.1, 43.2 ; 63) comportant un méplat (24.1, 24.2).

5. Système de fixation selon une des revendications 1 à 3, **caractérisé en ce que** la butée (3) comporte une tige (8 ; 42 ; 62) orientée en direction de la pièce de retenue arrière (5 ; 41 ; 61), la coulisse (22.1, 22.2 ; 31.1, 31.2 ; 43.1, 43.2 ; 63) du dispositif à mécanisme étant conformée sur la tige, optionnellement en rainure (23.1, 23.2 ; 44.1, 44.2, 45.1, 45.2), la coulisse (22.1, 22.2 ; 31.1, 31.2 ; 43.1, 43.2 ; 63) comportant un méplat (24.1, 24.2).

6. Système de fixation selon la revendication 4 ou 5, **caractérisé en ce que** la variation de la pente jusqu'au méplat (24.1, 24.2) est de 5° à 50°, de préférence de 15° à 45°.

7. Système de fixation selon une des revendications 4 à 6, **caractérisé en ce que** la rainure et/ou le méplat (24.1, 24.2) sur la tige (8, 42, 62) sont de conformation hélicoïdale.

8. Système de fixation selon une des revendications 1 à 7, **caractérisé en ce que** le dispositif à mécanisme comporte au moins deux coulisses (22.1, 22.2 ; 31.1, 31.2 ; 43.1, 43.2 ; 63), de préférence diamétralement opposées, chaque coulisse (22.1, 22.2 ; 31.1, 31.2 ; 43.1, 43.2 ; 63) étant en contact avec un élément sollicité élastiquement (7 ; 34 ; 46 ; 64).

9. Système de fixation selon une des revendications 1 à 8, **caractérisé en ce que**, sur au moins une des coulisses (31.1, 31.2) disposées sur le dispositif à mécanisme, une rampe (32.1, 32.2) est prévue avant la pente.

10. Système de fixation selon une des revendications 1 à 9, **caractérisé en ce que** le dispositif à mécanisme comporte au moins deux portions de coulisse (44.1, 44.2, 45.1, 45.2), la première portion de coulisse (44.1, 44.2) présentant une pente croissante axialement, et l'autre portion de coulisse, au nombre d'au moins une, (45.1, 45.2) présentant une pente orientée à l'opposé de la pente de la première portion de coulisse (44.1, 44.2), la seconde portion de coulisse (45.1, 45.2) se raccordant à la première portion de coulisse (44.1, 44.2).

11. Système de fixation selon la revendication 10, **caractérisé en ce que** l'autre portion de coulisse, au nombre d'au moins une, (45.1, 45.2) s'étend parallèlement à l'axe longitudinal du moyen de fixation (9).

12. Système de fixation selon une des revendications 1 à 11, **caractérisé en ce que** la pièce de retenue arrière (5 ; 41 ; 61) est reliée à la butée (3) par l'intermédiaire d'un goujon, la pièce de retenue arrière (5 ; 41 ; 61) étant reliée au goujon par friction ou par conjugaison de forces et la butée (3) y étant reliée à rotation, le goujon comportant, à l'extrémité orientée à l'opposé de la pièce de retenue arrière (5 ; 41 ; 61), un moyen de transmission de couple (10) qui dépasse au moins partiellement radialement de la butée (3).

13. Système de fixation selon une des revendications 1 à 12, **caractérisé en ce que** l'élément sollicité élastiquement est un élément sollicité par ressort (7 ; 34 ; 36) et comporte une pointe de guidage sollicitée par ressort (64), optionnellement un étrier élastique.

14. Système de fixation selon une des revendications 1 à 13, **caractérisé en ce qu'**entre le moyen de fixation (9) et la butée (3) est prévu un élément sollicité par ressort (11).
